# FASCICULE DE BREVET EUROPEEN

(11) **EP 1 305 175 B1**
(45) Date de publication et mention de la délivrance du brevet: **27.10.2004**
(21) Numéro de dépôt: 01960839.7
(22) Date de dépôt: 27.07.2001
(51) Int. Cl.: B60G 11/23, B60G 7/02, F16F 1/02

(54) **ARTICULATION ELASTIQUE A RAIDEUR RADIALE VARIABLE**
ELASTISCHES GELENK MIT VERÄNDERLICHER, RADIALER STEIFIGKEIT
ELASTIC ARTICULATION WITH VARIABLE RADIAL RIGIDITY

(30) Priorité: 28.07.2000 FR 0009905
(43) Date de publication de la demande: 02.05.2003
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: LEFEBVRE, Serge, F-63000 Clermont-Ferrand (FR)
(74) Mandataire: Abello, Michel
(86) Numéro de dépôt international: PCT/FR2001/002467
(87) Numéro de publication internationale: WO 2002/009959

(56) Documents cités:
- EP-A- 0 956 984
- FR-A- 2 661 719
- GB-A- 2 332 728

## Description

La présente invention concerne d'une manière générale les articulations élastiques. Elle est applicable notamment, mais non exclusivement, à une suspension de véhicule, en particulier à une suspension pour un essieu du genre comportant deux bras de suspension dont une extrémité supporte une fusée recevant une roue et dont l'autre extrémité est solidaire d'un arbre qui est monté de façon articulée sur la caisse du véhicule par l'intermédiaire d'une articulation élastique capable de travailler à la fois en torsion et en compression/traction pour assurer les fonctions ressort de suspension et filtrage de vibrations ou de chocs.

La présente invention concerne plus particulièrement une articulation élastique à raideur radiale variable, dont la raideur radiale a une valeur minimale le long d'un premier axe de référence d'un système de trois axes de référence, dont un second axe de référence est confondu avec l'axe de rotation de l'articulation élastique. On entend ici par "raideur radiale" la raideur de l'articulation dans n'importe quelle direction perpendiculaire à l'axe de rotation de l'articulation. Usuellement, dans le cas d'une articulation élastique pour suspension de véhicule, le "premier axe de référence" susmentionné est orienté perpendiculairement ou sensiblement perpendiculairement à un plan horizontal de repère lié à la caisse du véhicule. Par "plan horizontal de repère lié à la caisse", on entend ici un plan qui se déplace parallèlement au sol pendant le roulage du véhicule dans des conditions normales.

Des articulations élastiques à raideur radiale variable et comportant les caractéristiques du préambule de la revendication 1, sont déjà bien connues, notamment par le brevet européen EP 0 956 984 de la demanderesse. L'articulation élastique décrite dans ce document comprend une armature cylindrique intérieure, une armature extérieure entourant concentriquement l'armature intérieure, et un manchon en matériau élastomérique, qui est disposé entre les armatures intérieure et extérieure et dont les surfaces périphériques intérieure et extérieure sont liées sans possibilité de glissement auxdites armatures intérieure et extérieure. Le manchon en matériau élastomérique comporte au moins une alvéole, de préférence deux alvéoles diamétralement opposées, qui sont positionnées de telle façon que l'articulation présente une raideur radiale minimale le long du premier axe de référence susmentionné. Chaque alvéole est débouchante dans au moins une des faces d'extrémité du manchon, de préférence dans ses deux faces d'extrémité, c'est-à-dire que, dans ce dernier cas, chaque alvéole traverse le manchon de part en part dans une direction parallèle à l'axe de l'articulation. Chaque alvéole a, en outre, une forme arquée dans le sens circonférentiel du manchon. La tenue à la fatigue d'une telle articulation élastique connue est difficile à garantir dans toutes les conditions d'utilisation.

En outre, avec l'articulation élastique décrite dans le brevet européen EP 0 956 984, il est relativement difficile d'affiner la direction dans laquelle l'articulation présente sa raideur radiale minimale, en particulier lorsque le manchon en matériau élastomérique travaille en torsion comme cela est le cas dans une articulation élastique ayant une fonction de ressort de suspension. On peut penser que cette difficulté est due à la déformation en torsion du manchon en matériau élastomérique, déformation qui modifie la géométrie du manchon lorsque l'articulation élastique porte la charge nominale pour laquelle elle est conçue.

La présente invention a donc pour but de fournir une articulation élastique à raideur radiale variable, capable de travailler en compression/traction et en torsion, et présentant une tenue améliorée à la fatigue aussi bien sous des sollicitations de compression/traction que sous des sollicitations torsionnelles.

La présente invention a également pour but de fournir une articulation élastique à raideur radiale variable, dont la direction dans laquelle la raideur radiale est minimale peut être bien affinée.

A cet effet, l'invention fournit une articulation élastique à raideur radiale variable destinée à être montée de façon à travailler à la fois en compression/traction et en torsion, en particulier pour une suspension de véhicule, comprenant une armature intérieure, une armature extérieure entourant l'armature intérieure, et un manchon en matériau élastomérique, qui est disposé entre les armatures intérieure et extérieure et dont les surfaces périphériques intérieure et extérieure sont liées sans possibilité de glissement auxdites armatures intérieure et extérieure, ledit manchon étant conformé de telle façon que l'articulation ait une raideur radiale minimale le long d'un premier axe de référence d'un système de trois axes de référence, dont un second axe de référence est confondu avec l'axe de rotation de l'articulation élastique, caractérisée en ce qu'au moins une des deux faces d'extrémité du manchon a un profil qui évolue de façon continue dans le sens circonférentiel du manchon entre au moins un minimum et au moins un maximum, et en ce que le profil, dans la région périphérique intérieure de ladite face d'extrémité, a au moins un minimum et au moins un maximum qui sont décalés d'un angle prédéfini respectivement par rapport à au moins un minimum et au moins un maximum du profil dans la région périphérique extérieure de ladite face d'extrémité lorsqu'aucune charge n'est appliquée à l'articulation.

Ledit angle prédéfini est de préférence choisi de telle façon que, lorsque l'articulation est soumise à une charge de référence provoquant une rotation relative dudit angle prédéfini des armatures intérieure et extérieure l'une par rapport à l'autre, les lieux géométriques des minima et les lieux géométriques des maxima du profil entre lesdites régions périphériques intérieure et extérieure sont orientés sensiblement radialement respectivement le long du premier axe de référence et le long d'un troisième axe de référence du système de trois axes de référence.

De préférence, dans chacune desdites régions périphériques intérieure et extérieure et dans les régions intermédiaires, ledit profil comporte deux minima et deux maxima le long de la circonférence du manchon en matériau élastomérique.

De préférence, les deux faces d'extrémité du manchon ont un profil ondulé. Le profil ondulé a par exemple une forme sensiblement sinusoïdale ou pseudo-sinusoïdale.

De préférence, le premier axe de référence est sensiblement perpendiculaire à un plan horizontal lié à la caisse du véhicule.

Dans un mode de réalisation de l'invention, l'armature extérieure est constituée par une bague ou manchon cylindrique qui est fixé rigidement dans une position angulaire prédéfinie dans un alésage d'une pièce de support destinée à être fixée à la caisse du véhicule.

La pièce de support peut être constituée par un longeronnet, qui comporte au moins une face d'appui, de préférence deux faces d'appui, apte à coopérer avec au moins une face correspondante d'appui sur la caisse du véhicule, de telle sorte que, après fixation du longeronnet à ladite caisse, les trois axes de référence de l'articulation élastique aient des orientations prédéfinies par rapport à un système d'axes de référence lié à la caisse du véhicule.

D'autres caractéristiques et avantages de l'invention apparaîtront dans la description suivante d'un mode de réalisation de l'invention donné à titre d'exemple en référence aux dessins annexés, sur lesquels :
- la figure 1 représente de manière très schématique un essieu de véhicule incorporant deux articulations à raideur radiale variable selon l'invention ;
- la figure 2 est une vue en perspective écorchée de l'une des deux articulations élastiques incorporées dans l'essieu de la figure 1 ;
- la figure 3 est une vue en élévation, à l'état libre, du manchon en matériau élastomérique de l'articulation élastique de la figure 2 ;
- la figure 4 est une vue du manchon en matériau élastomérique suivant la flèche F de la figure 3 ;
- la figure 5 est une vue semblable à la figure 3 et montre la forme du manchon en matériau élastomérique lorsqu'il est soumis à une charge torsionnelle de référence ;
- la figure 6 est une vue semblable à la figure 4, le manchon en matériau élastomérique étant soumis à la charge torsionnelle de référence ;
- la figure 7 est une vue en coupe suivant la ligne brisée VII-VII de la figure 6 ;
- la figure 8 est un graphique montrant le profil ondulé de l'une des faces d'extrémité du manchon en matériau élastomérique dans la région périphérique intérieure et dans la région périphérique extérieure dudit manchon, lorsque celui-ci est à l'état libre ;
- la figure 9 est un graphique montrant le profil ondulé de la face d'extrémité du manchon en matériau élastomérique dans la région périphérique intérieure et dans la région périphérique extérieure dudit manchon, lorsque celui-ci est soumis à la charge torsionnelle de référence ;
- la figure 10 est une vue en coupe suivant la ligne X-X de la figure 6 ;
- la figure 11 est une vue en coupe semblable à celle de la figure 10, montrant la déformation du manchon en matériau élastomérique lorsqu'il est soumis à une sollicitation conique ;
- la figure 12 est une vue en perspective montrant l'articulation élastique de la figure 2 installée dans l'alésage d'un longeronnet destiné à être fixé à la caisse d'un véhicule ;
- la figure 13 est une vue en coupe horizontale du longeronnet et de l'articulation élastique de la figure 12.

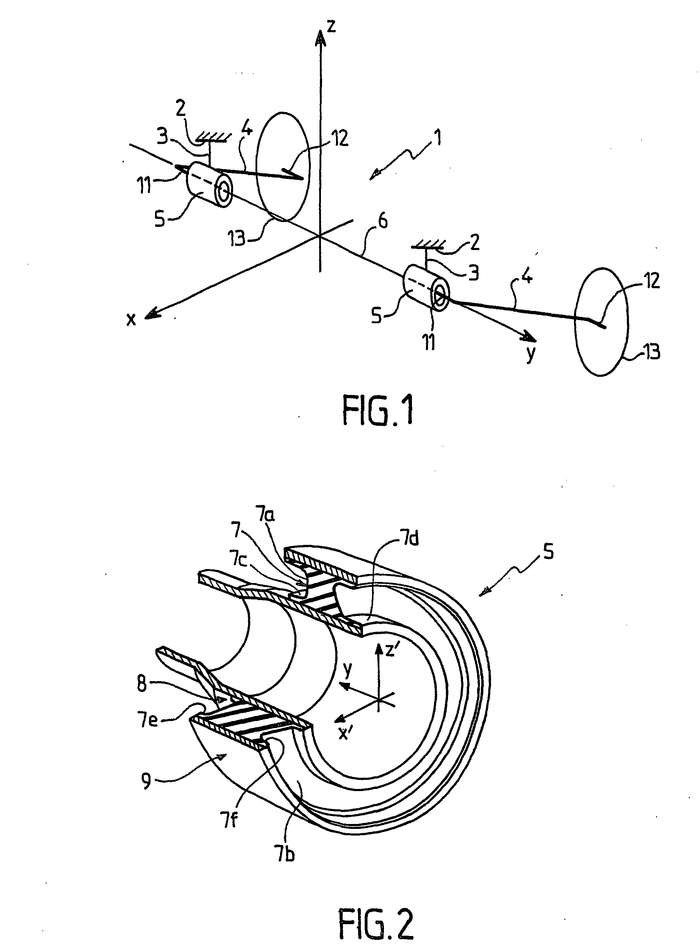

En se reportant à la figure 1, on peut voir un essieu 1, plus précisément un essieu arrière, destiné à être monté sur la caisse 2 d'un véhicule par l'intermédiaire de supports 3, dont une forme de réalisation avantageuse sera décrite en détail plus loin. Sur la figure 1, on a également représentée un système de trois axes de référence X, Y et Z lié à la caisse du véhicule. L'axe X est l'axe médian longitudinal du véhicule, l'axe Y est un axe transversal, qui définit avec l'axe X le plan horizontal de repère mentionné plus haut, et l'axe Z est vertical.

L'essieu 1 comporte essentiellement deux bras tirés de suspension 4 qui sont reliés aux supports 3 par des articulations élastiques 5 capables de travailler en compression/traction et en torsion de telle façon que les deux bras de suspension 4 puissent avoir, indépendamment l'un de l'autre, un débattement angulaire limité par rapport à la caisse 2 autour de l'axe 6 des articulations 5, qui est confondu avec l'axe Y.

Dans la figure 2, on a représenté l'une des deux articulations 5, qui sont similaires (symétriques, en général). Comme montré dans la figure 2, l'articulation 5 est essentiellement constituée par un manchon 7 en un matériau élastomérique, qui est disposé entre une armature cylindrique intérieure 8 et une armature cylindrique extérieure 9 et qui est fixé rigidement à ces deux armatures, sans possibilité de glissement, par exemple par la technique connue d'adhérisation.

Chaque articulation élastique 5 a, comme on le verra plus loin, une raideur radiale variable, c'est-à-dire une raideur radiale ayant une valeur minimale le long d'un premier axe de référence qui devra être orienté selon une première direction privilégiée, par exemple parallèle ou sensiblement parallèle à l'axe Z, et une valeur maximale le long d'un autre axe de référence qui devra être orienté selon une autre direction privilégiée, par exemple parallèle ou sensiblement parallèle à l'axe X. Dans ces conditions, les articulations élastiques 5 ont, de façon connue en soi, des surfaces de référence ou des repères (non montrés) qui, lors du montage desdites articulations élastiques dans les supports 3, coopèrent ou sont alignés respectivement avec des surfaces correspondantes de référence ou avec des repères correspondants sur les supports 3, de telle façon que les axes de référence le long desquels les articulations élastiques 5 présentent leur raideur radiale minimale et maximale soient correctement orientés par rapport à la caisse 2 du véhicule.

En revenant à la figure 1, on peut voir que chaque bras de suspension 4 porte, du côté de l'articulation élastique 5 correspondante, un arbre 11 et, du côté opposé à ladite articulation, une fusée 12 destinée à recevoir une roue 13, plus précisément une roue arrière du véhicule. Chacun des deux arbres 11, dont les axes sont alignés avec l'axe 6 des articulations élastiques 5 et avec l'axe Y, est fixé rigidement, c'est-à-dire sans rotation relative possible, à l'armature intérieure 8 de l'articulation élastique correspondante. Par exemple, la fixation de l'arbre 11 à l'armature intérieure 8 peut être effectuée par emboîtement à force, par collage ou par toute autre technique connue dans ce domaine de la technique. En outre, il peut être prévu une traverse (non montrée) qui relie les deux arbres 11 selon une configuration en U, ou les deux bras 4 selon une configuration en H. La traverse peut avoir une structure semblable à celle décrite dans la demande de brevet EP 0 956 984 ou dans la demande de brevet WO 97/47 486.

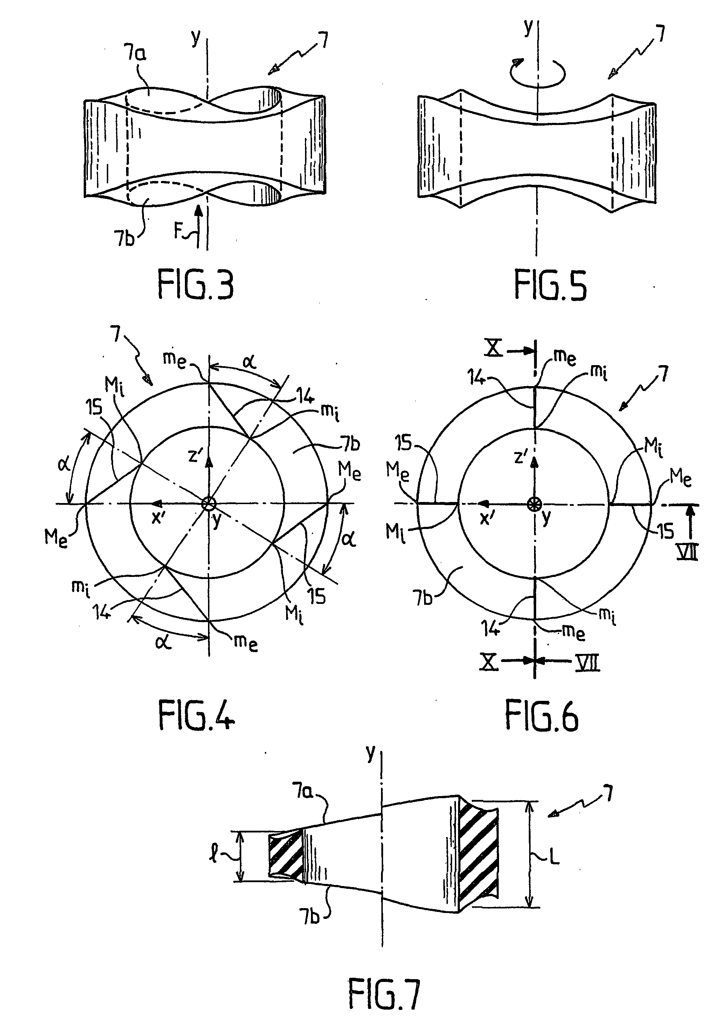

Comme indiqué plus haut, chacune des deux articulations élastiques 5 est conçue pour présenter une raideur radiale variable dans le sens circonférentiel, c'est-à-dire que la raideur de l'articulation varie en fonction de l'angle polaire de la direction radiale autour de l'axe Y. Conformément à la présente invention, la variation de la raideur radiale est obtenue en donnant à au moins une des deux faces d'extrémité 7a et 7b du manchon 7 en matériau élastomérique, de préférence à ses deux faces d'extrémité, un profil qui évolue de façon continue dans le sens circonférentiel du manchon 7 entre au moins un minimum et au moins un maximum. Comme cela est notamment visible dans la figure 3, le profil peut être un profil ondulé qui a, par exemple, une forme sinusoïdale ou pseudo-sinusoïdale avec deux minima et deux maxima sur la circonférence du manchon 7.

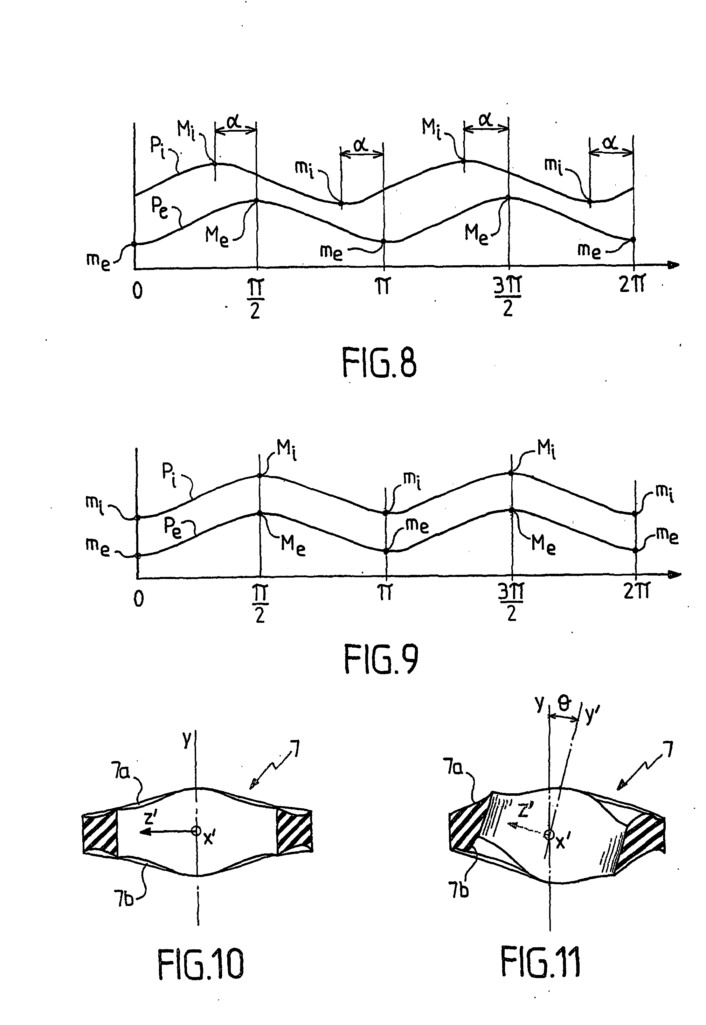

Comme chaque articulation élastique 5 est destinée à travailler en torsion pour supporter au moins une partie de la charge (caisse du véhicule) et assurer une fonction ressort de suspension, les deux minima mᵢ et les deux maxima Mᵢ du profil ondulé Pᵢ dans la région périphérique intérieure de la face d'extrémité 7a ou 7b sont décalés angulairement d'un angle prédéfini α respectivement par rapport aux deux minima mₑ et aux deux maxima Mₑ du profil ondulé Pₑ dans la région périphérique extérieure de la face d'extrémité 7a ou 7b lorsque le manchon 7 n'est soumis à aucune charge, comme montré dans les figures 4 et 8. Entre les minima mᵢ et mₑ, les lieux géométriques 14 des minima du profil ondulé de la face d'extrémité 7a ou 7b du manchon 7 s'étendent obliquement par rapport à une direction radiale, comme montré dans la figure 4. De même, entre les maxima Mᵢ et Mₑ, les lieux géométriques 15 des maxima du profil ondulé de la face d'extrémité 7a ou 7b s'étendent obliquement par rapport à une autre direction radiale, comme cela est également montré dans la figure 4.

La valeur de l'angle prédéfini α est choisie de telle façon que, lorsque l'articulation élastique 5 est soumise à une charge de référence provoquant une rotation relative de cet angle α, par exemple de l'armature intérieure 8 par rapport à l'armature extérieure 9, le manchon 7 subit une torsion et se déforme de telle façon que les minima mᵢ et les maxima Mᵢ du profil ondulé Pᵢ dans la région périphérique intérieure de la face d'extrémité 7a ou 7b sont alignés radialement respectivement avec les minima mₑ et les maxima Mₑ du profil ondulé Pₑ dans la région périphérique extérieure de la face d'extrémité 7a ou 7b, comme montré dans les figures 6 et 9. Les lieux géométriques 14 des minima et les lieux géométriques 15 des maxima du profil ondulé sur chacune des deux faces d'extrémité 7a et 7b du manchon 7 sont alors orientés sensiblement radialement respectivement le long des deux axes de référence X' et Z' d'un système de trois axes de référence X', Y, Z' lié à chaque articulation élastique 5. Les deux axes X' et Z' sont perpendiculaires à l'axe Y des deux articulations élastiques 5, qui est aussi désigné par la référence 6 dans la figure 1.

La charge de référence susmentionnée, qui détermine la valeur de l'angle α ainsi qu'une assiette de référence du véhicule comportant l'essieu 1 de la figure 1, équipé des deux articulations élastiques 5 selon l'invention, peut être définie par exemple comme étant la charge appliquée à chacune des deux roues 13 de l'essieu 1 pour un véhicule en ordre de marche en usage courant. Cette charge de référence va naturellement varier d'un modèle de véhicule à un autre et sa définition peut elle-même varier d'un constructeur de véhicules à un autre. Par exemple, pour un véhicule à quatre roues, la charge de référence peut être définie comme étant le quart de la somme du poids à vide du véhicule, du poids de deux mannequins de 75 kg chacun, et d'un poids de carburant correspondant à un réservoir de carburant à moitié plein.

Avec la construction de l'articulation élastique 5 décrite ci-dessus, la longueur axiale du manchon 7 en matériau élastomérique a une valeur minimale ℓ en correspondance avec les lieux géométriques 14 des minima du profil ondulé des deux faces d'extrémité 7a et 7b, c'est-à-dire dans le plan défini par les deux axes Y et Z', et une valeur maximale L en correspondance avec les lieux géométriques 15 des maxima du profil ondulé des deux faces d'extrémité 7a et 7b, c'est-à-dire dans le plan défini par les deux axes Y et X', comme montré respectivement dans les moitiés gauche et droite de la figure 7. Etant donné que la raideur radiale d'un manchon en matériau élastomérique est, en première approximation, proportionnelle à la longueur axiale du manchon, l'articulation élastique 5 décrite ci-dessus aura donc une raideur radiale minimale le long de l'axe Z' et une raideur radiale maximale le long de l'axe X', lorsque le manchon est soumis à la charge de référence.

Lors du montage des deux articulations élastiques 5 dans les supports 3 de l'essieu 1, les axes X' et Z' de chaque articulation 5 sont orientés, grâce aux surfaces de référence et/ou aux repères susmentionnés des supports 3 et des armatures extérieures 9, de façon à être respectivement parallèles aux axes X et Z du système d'axes X, Y, Z lié à la caisse 2 du véhicule. C'est-à-dire que l'axe X' est horizontal et l'axe Z' vertical. C'est dans cette position que les performances des deux articulations élastiques 5 en filtrage acoustique s'avèrent les meilleures. Toutefois, il n'est pas absolument indispensable que l'axe Z' de chaque articulation 5 soit orienté rigoureusement verticalement et son orientation pourra être comprise entre des limites de + 45° et - 45° par rapport à une perpendiculaire au plan horizontal défini par les axes X et Y du système de référence lié à la caisse du véhicule. De même, il n'est pas non plus absolument indispensable que les minima et maxima du profil ondulé de chacune des deux faces d'extrémité 7a et 7b du manchon 7 soient angulairement équidistants le long de la circonférence.

L'articulation élastique 5 à raideur radiale variable selon l'invention a, par rapport aux articulations élastiques à raideur radiale variable antérieurement connues, une meilleure tenue à la fatigue aussi bien lorsque l'articulation travaille en compression/traction que lorsqu'elle travaille en torsion. On peut penser que cela est dû à l'évolution continue et régulière du profil ondulé de ses deux faces d'extrémité 7a et 7b, qui font que, en service, les contraintes de compression/traction et les contraintes de torsion ne restent pas concentrées dans des zones localisées du manchon 7, mais peuvent se répartir plus facilement dans le coeur dudit manchon, sur toute sa circonférence.

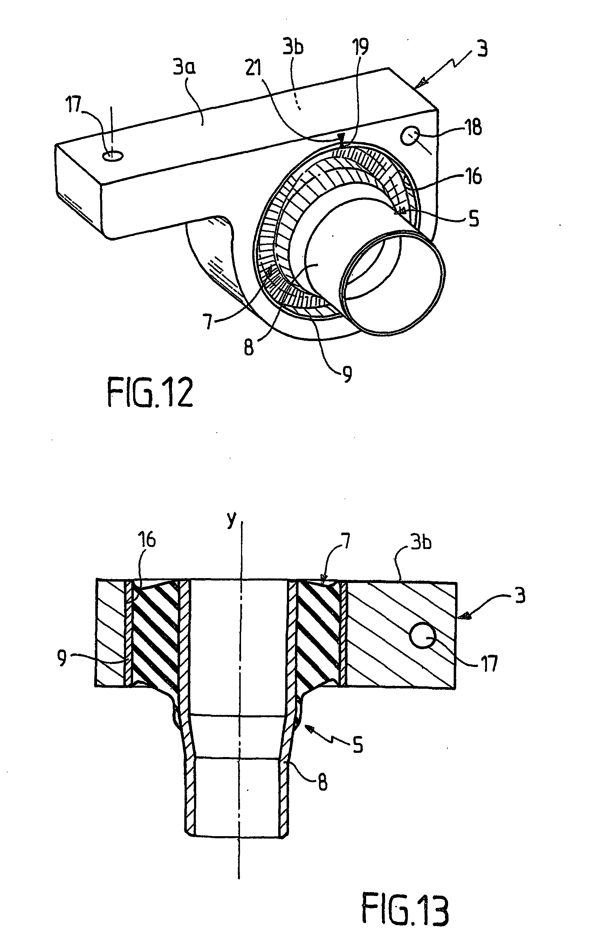

En outre, la géométrie du manchon 7 en matériau élastomérique décrit plus haut permet un assouplissement de l'articulation élastique en raideur conique autour de l'axe X'. En se reportant aux figures 10 et 11, on peut voir comment la section du manchon 7 par le plan défini par les axes Y et Z' se déforme lorsque l'articulation élastique 5 est soumise à une sollicitation conique, c'est-à-dire à une sollicitation telle que l'axe Y' de l'armature intérieure 8 de l'articulation élastique a tourné d'un angle θ (figure 11) autour de l'axe X' par rapport à l'axe Y de l'armature extérieure 9 de ladite articulation.

En se reportant maintenant aux figures 12 et 13, on peut voir une forme de réalisation d'un support 3 servant au montage de l'une ou l'autre des deux articulations élastiques 5 de l'essieu 1 sur la caisse 2 d'un véhicule. Le support 3 est ici constitué par un longeronnet, réalisé par exemple sous la forme d'une pièce coulée ou filée en aluminium ou en alliage d'aluminium, qui présente un alésage 16 dans lequel l'armature extérieure 9 de l'articulation élastique 5 est fixée rigidement, par exemple par emboîtement à force et/ou par collage.

Le longeronnet 3 comporte au moins une face plane d'appui, de préférence deux faces planes d'appui 3a et 3b, qui sont perpendiculaires l'une à l'autre et qui sont destinées à servir de surface de référence pour le montage du longeronnet 3 sur la caisse 2 du véhicule. La face plane 3b est perpendiculaire à l'axe de l'alésage 16, donc aussi à l'axe Y de l'articulation élastique 5, et est destinée à être appliquée contre une surface verticale d'appui de la caisse 2, qui est parallèle au plan défini par les axes X et Z du système de référence lié à la caisse du véhicule. La face plane d'appui 3a du longeronnet 3 est destinée à être appliquée contre une autre surface plane d'appui qui est prévue sur la caisse 2 du véhicule et qui est parallèle au plan horizontal défini par les deux axes X et Y du système de référence lié à la caisse du véhicule.

Le longeronnet 3 comporte en outre deux trous 17 et 18 dont les axes sont perpendiculaires respectivement aux faces planes d'appui 3a et 3b. Les trous 17 et 18 sont destinés à recevoir des vis ou des boulons pour la fixation du longeronnet 3 sur les surfaces d'appui précitées de la caisse du véhicule.

Afin que l'axe Z' le long duquel l'articulation élastique 5 présente sa raideur radiale minimale puisse être orienté dans la direction désirée par rapport à la caisse 2 du véhicule, notamment par rapport à l'axe Z du système de référence lié à la caisse du véhicule, l'articulation élastique 5 peut avantageusement comporter une marque 19 destinée à être placée en coïncidence avec une marque 21 portée par le longeronnet 3 (figure 12) lorsque l'articulation élastique 5 est insérée dans l'alésage 16 du longeronnet 3. La marque 19 peut être par exemple située à la périphérie extérieure de l'une des faces d'extrémité du manchon 7 dans une position angulaire correspondant à l'un des deux minima mₑ (figure 6) du profil ondulé.

Il va de soi que le mode de réalisation de l'invention qui a été décrit ci-dessus a été donné à titre d'exemple purement indicatif et nullement limitatif, et que de nombreuses modifications peuvent être apportées par l'homme de l'art sans sortir du cadre de l'invention. C'est ainsi notamment que, bien que le manchon 7 en matériau élastomérique ait été représenté avec une section longitudinale qui a de préférence sensiblement la forme d'un trapèze, dont la grande base est située du côté de l'armature intérieure 8 et la petite base du côté de l'armature extérieure 9, et avec des lèvres périphériques intérieures 7c et 7d et des lèvres périphériques extérieures 7e et 7f sur les faces d'extrémité 7a et 7b, comme montré notamment dans la figure 2, la section longitudinale du manchon 7 pourrait avoir par exemple une forme rectangulaire.

En outre, le nombre des minima et le nombre des maxima du profil le long de la circonférence de la ou de chacune des faces d'extrémité du manchon en matériau élastomérique n'est pas nécessairement égal à deux. Ce nombre peut être égal à un ou plus grand que deux selon le nombre des directions radiales le long desquelles il est désiré que le manchon en matériau élastomérique ait respectivement une raideur radiale minimale et une raideur radiale maximale.

En outre, bien que dans la représentation des figures 8 et 9, l'amplitude crête à crête de l'ondulation (différence d'amplitude entre les minima et les maxima) du profil Pᵢ dans la région périphérique intérieure d'une face d'extrémité 7a ou 7b du manchon 7 soit égale ou sensiblement égale à l'amplitude crête à crête de l'ondulation du profil Pₑ dans la région périphérique extérieure de ladite face d'extrémité 7a ou 7b, les deux profils Pᵢ et Pₑ peuvent avoir des amplitudes crête à crête différentes et, dans un cas limite, l'un des deux profils Pᵢ et Pₑ peut avoir une amplitude crête à crête nulle ou quasiment nulle.

En outre, pour l'obtention d'une raideur radiale variable, le profil de la ou des faces d'extrémité du manchon, qui évolue de façon continue dans le sens circonférentiel du manchon, peut être combiné avec une variation continue de l'épaisseur radiale dudit manchon le long de la circonférence de ce dernier, de sorte que la section transversale d'au moins une des armatures 8 et 9 n'est pas nécessairement circulaire, mais peut avoir par exemple une forme elliptique ou ovale.

## Revendications

1. Articulation élastique à raideur radiale variable, destinée à travailler à la fois en compression/traction et en torsion, en particulier pour une suspension de véhicule, comprenant une armature intérieure (8), une armature extérieure (9) entourant l'armature intérieure, et un manchon (7) en matériau élastomérique, qui est disposé entre les armatures intérieure et extérieure et dont les surfaces périphériques intérieure et extérieure sont liées sans possibilité de glissement auxdites armatures intérieure et extérieure, ledit manchon étant conformé de telle façon que l'articulation ait une raideur radiale minimale le long d'un premier axe de référence (Z') d'un système de trois axes de référence (X', Y, Z'), dont un second axe de référence (Y) est confondu avec l'axe de rotation (6) de l'articulation élastique (5), **caractérisée en ce qu'**au moins une des deux faces d'extrémité (7a et 7b) du manchon (7) a un profil qui évolue de façon continue dans le sens circonférentiel du manchon entre au moins un minimum et au moins un maximum, et **en ce que** le profil (Pᵢ), dans la région périphérique intérieure de ladite face d'extrémité, a au moins un minimum (mᵢ) et au moins un maximum (Mᵢ) qui sont décalés d'un angle prédéfini (α) respectivement par rapport à au moins un minimum (mₑ) et au moins un maximum (Mₑ) du profil (Pₑ) dans la région périphérique extérieure de ladite face d'extrémité (7a ou 7b) lorsqu'aucune charge n'est appliquée à l'articulation.

2. Articulation élastique selon la revendication 1, **caractérisée en ce que** ledit angle prédéfini (α) est choisi de telle façon que, lorsque l'articulation (5) est soumise à une charge de référence provoquant une rotation relative dudit angle prédéfini des armatures intérieure (8) et extérieure (9) l'une par rapport à l'autre, les lieux géométriques (14) des minima et les lieux géométriques (15) des maxima du profil entre lesdites régions périphériques intérieure et extérieure sont orientés sensiblement radialement respectivement le long du premier axe de référence (Z') et le long d'un troisième axe de référence (X') du système de trois axes de référence.

3. Articulation élastique selon la revendication 1 ou 2, **caractérisée en ce que** dans chacune desdites régions périphériques intérieure et extérieure et dans les régions intermédiaires, ledit profil (Pᵢ, Pₑ) comporte deux minima et deux maxima le long de la circonférence du manchon (7) en matériau élastomérique.

4. Articulation élastique selon l'une quelconque des revendications 1 à 3, **caractérisée en ce que** les deux faces d'extrémité (7a et 7b) du manchon (7) ont un profil ondulé.

5. Articulation élastique selon l'une quelconque des revendications 1 à 4, **caractérisée en ce que** le profil ondulé a une forme sensiblement sinusoïdale ou pseudo-sinusoïdale.

6. Articulation élastique selon l'une quelconque des revendications 1 à 5, **caractérisée en ce que** le premier axe de référence (Z') est sensiblement perpendiculaire à un plan horizontal lié à la caisse du véhicule.

7. Articulation élastique selon l'une quelconque des revendications 1 à 6, **caractérisée en ce que** l'armature extérieure (9) est constituée par une bague ou manchon cylindrique qui est fixé rigidement dans une position angulaire prédéfinie dans un alésage (16) d'une pièce de support (3) destinée à être fixée à la caisse (2) du véhicule.

8. Articulation élastique selon la revendication 7, **caractérisée en ce que** la pièce de support (3) est un longeronnet, qui comporte au moins une face d'appui, de préférence deux faces d'appui (3a, 3b), apte à coopérer avec au moins une face correspondante d'appui sur la caisse (2) du véhicule, de telle sorte que, après fixation du longeronnet à ladite caisse, les trois axes de référence (X', Y, Z') de l'articulation élastique (5) aient des orientations prédéfinies par rapport à un système d'axes de référence (X, Y, Z) lié à la caisse du véhicule.

9. Suspension de véhicule comportant deux articulations élastiques porteuses travaillant en torsion, **caractérisée en ce que** chaque articulation élastique est une articulation selon l'une quelconque des revendications 1 à 8.

## Patentansprüche

1. Elastisches Gelenk mit variabler radialer Steifheit, das dazu bestimmt ist, sowohl mit Druck/Zug als auch mit Verdrehung zu arbeiten, insbesondere für eine Fahrzeugaufhängung, das eine innere Bewehrung (8), eine äußere Bewehrung (9), die die innere Bewehrung umgibt, und eine Hülse (7) aus Elastomermaterial aufweist, die zwischen der inneren und der äußeren Bewehrung angeordnet ist und deren innere und äußere Umfangsfläche ohne Gleitmöglichkeit mit der inneren und der äußeren Bewehrung verbunden sind, wobei die Hülse so ausgebildet ist, dass das Gelenk entlang einer ersten Bezugsachse (Z') eines Systems von drei Bezugsachsen (X', Y, Z') eine minimale Steifheit hat, von dem eine zweite Bezugsachse (Y) mit der Drehachse (6) des elastischen Gelenks (5) zusammenfällt, **dadurch gekennzeichnet, dass** mindestens eine der beiden Endflächen (7a und 7b) der Hülse (7) ein Profil hat, das sich kontinuierlich in Umfangsrichtung der Hülse zwischen mindestens einem Minimum und mindestens einem Maximum entwickelt, und dass das Profil (Pᵢ) in der inneren Umfangszone der Endfläche mindestens ein Minimum (mᵢ) und mindestens ein Maximum (Mᵢ) hat, die um einen vorbestimmten Winkel (α) bezüglich mindestens eines Minimums (mₑ) bzw. mindestens eines Maximums (Mₑ) des Profils (Pₑ) in der äußeren Umfangszone der Endfläche (7a oder Tb) versetzt sind, wenn keine Last auf das Gelenk aufgebracht wird.

2. Elastisches Gelenk nach Anspruch 1, **dadurch gekennzeichnet, dass** der vorbestimmte Winkel (α) so gewählt wird, dass, wenn auf das Gelenk (5) eine Bezugslast ausgeübt wird, die eine relative Drehung des vorbestimmten Winkels der inneren (8) und äußeren Bewehrung (9) zueinander bewirkt, die geometrischen Orte (14) der Minima und die geometrischen Orte (15) der Maxima des Profils zwischen der inneren und der äußeren Umfangszone im wesentlichen radial bzw. entlang der ersten Bezugsachse (Z') und entlang einer dritten Bezugsachse (X') des Systems von drei Bezugsachsen ausgerichtet sind.

3. Elastisches Gelenk nach Anspruch oder 2, **dadurch gekennzeichnet, dass** in jeder der inneren und äußeren Umfangszonen und in den Zwischenzonen das Profil (Pᵢ, Pₑ) zwei Minima und zwei Maxima entlang des Umfangs der Hülse (7) aus Elastomermaterial aufweist.

4. Elastisches Gelenk nach einem der Ansprüche 1 bis 3, **dadurch gekennzeichnet, dass** die beiden Endflächen (7a und 7b) der Hülse (7) ein gewelltes Profil haben.

5. Elastisches Gelenk nach einem der Ansprüche 1 bis 4, **dadurch gekennzeichnet, dass** das gewellte Profil im wesentlichen sinusförmig oder pseudosinusförmig ist.

6. Elastisches Gelenk nach einem der Ansprüche 1 bis 5, **dadurch gekennzeichnet, dass** die erste Bezugsachse (Z') im wesentlichen senkrecht zur einer waagrechten Ebene liegt, die mit dem Fahrzeugaufbau verbunden ist.

7. Elastisches Gelenk nach einem der Ansprüche 1 bis 6, **dadurch gekennzeichnet, dass** die äußere Bewehrung (9) aus einem Ring oder einer zylindrischen Hülse besteht, die in einer vorbestimmten Winkelstellung starr in einer Bohrung (16) eines Stützteils (3) befestigt ist, das dazu bestimmt ist, am Aufbau (2) des Fahrzeugs befestigt zu werden.

8. Elastisches Gelenk nach Anspruch 7, **dadurch gekennzeichnet, dass** das Stützteil (3) ein Hilfslängsträger ist, der mindestens eine Auflagefläche, vorzugsweise zwei Auflageflächen (3a, 3b), aufweist, die in der Lage sind, mit mindestens einer entsprechenden Auflagefläche auf dem Aufbau (2) des Fahrzeugs zusammenzuwirken, so dass nach Befestigung des Hilfslängsträgers am Aufbau die drei Bezugsachsen (X', Y, Z') des elastischen Gelenks (5) bezüglich eines mit dem Fahrzeugaufbau verbundenen Bezugsachsensystems (X, Y, Z) vorbestimmte Ausrichtungen haben.

9. Fahrzeugaufhängung, die zwei elastische tragende Gelenke aufweist, die in Verdrehung arbeiten, **dadurch gekennzeichnet, dass** jedes elastische Gelenk ein Gelenk nach einem der Ansprüche 1 bis 8 ist.

## Claims

1. Resilient joint with variable radial rigidity, designed to operate in compression/traction and in torsion at the same time, in particular for a vehicle suspension, comprising an inner reinforcement (8), an outer reinforcement (9) surrounding the inner reinforcement, and a sleeve (7) made of elastomeric material, which is arranged between the inner and outer reinforcements and whose inner and outer peripheral surfaces are linked without any possibility of sliding to the said inner and outer reinforcements, the said sleeve being formed in such a way that the joint has a minimal radial rigidity along a first reference axis (Z') of a system with three reference axes (X', Y, Z'), whose second reference axis (Y) merges with the axis of rotation (6) of the resilient joint (5), **characterized in that** at least one of the two end surfaces (7a and 7b) of the sleeve (7) has a profile that moves continuously in the circumferential direction of the sleeve between at least a minimum and at least a maximum, and **in that** the profile (Pᵢ), in the inner peripheral zone of the said end surface, has at least a minimum (mᵢ) and at least a maximum (Mᵢ) which are offset by a predefined angle (α) respectively relative to at least a minimum (mₑ) and at least a maximum (Mₑ) of the profile (Pₑ) in the outer peripheral zone of the said end surface (7a or 7b) when no load is applied to the joint.

2. Resilient joint according to Claim 1, **characterized in that** the said predefined angle (α) is selected in such a way that, when the joint (5) is subjected to a reference load producing a relative rotation of the said predefined angle of the inner (8) and outer (9) reinforcements relative to one another, the geometric loci (14) of the minima and the geometric loci (15) of the maximums of the profile between the said inner and outer peripheral zones are oriented approximately radially respectively along the first reference axis (Z') and a third reference axis (X') of the system with three reference axes.

3. Resilient joint according to Claim 1 or 2, **characterized in that** in each of the inner and outer peripheral zones and in the intermediate zones, the said profile (Pᵢ, Pₑ) has two minima and two maximums along the circumference of the sleeve (7) of elastomeric material.

4. Resilient joint according to any of Claims 1 to 3, **characterized in that** the two end surfaces (7a and 7b) of the sleeve (7) have a wavy profile.

5. Resilient joint according to any of Claims 1 to 4, **characterized in that** the wavy profile has an approximately sinusoidal or pseudo-sinusoidal shape.

6. Resilient joint according to any of Claims 1 to 5, **characterized in that** the first reference axis (Z') is approximately perpendicular to a horizontal plane linked to the vehicle body.

7. Resilient joint according to any of Claims 1 to 6, **characterized in that** the outer reinforcement (9) is made up of a cylindrical collar or sleeve that is rigidly fixed in a predefined angular position in a bore (16) of a supporting piece (3) designed to be fixed to the vehicle body (2).

8. Resilient joint according to Claim 7, **characterized in that** the supporting piece (3) is a side rail, which has at least one supporting surface, preferably two supporting surfaces (3a, 3b), capable of cooperating with at least one corresponding supporting surface on the vehicle body (2), so that, after fixation of the rail to the said body, the three reference axes (X', Y, Z) of the resilient joint (5) have predefined orientations relative to a system of reference axes (X, Y, Z) linked to the vehicle body.

9. Vehicle suspension comprising two resilient bearing joints operating in torsion, **characterized in that** each resilient joint is a joint according to any of Claims 1 to 8.
